# EUROPEAN PATENT APPLICATION

(11) **EP 4 825 566 A1**
(43) Date of publication of application: **21.10.2026**
(21) Application number: 26165536.9
(22) Date of filing: 17.03.2026
(51) Int. Cl.: B29C 73/16

(54) **PUNCTURE REPAIR KIT**

(30) Priority: 16.04.2025 JP 2025067686
(71) Applicant: SUMITOMO RUBBER INDUSTRIES, LTD., Kobe-shi, Hyogo 651-0072 (JP)
(72) Inventor: NOMURA, KEISUKE, Hyogo, 651-0072 (JP); MAKI, TAKASHI, Hyogo, 651-0072 (JP)
(74) Representative: Forresters IP LLP

(57) **Abstract**

Provided is a puncture repair kit 1 capable of selectively switching between a first mode in which a puncture of an object T can be repaired and a second mode in which only compressed air A can be supplied to the object T, the puncture repair kit 1 including: a container 2 used in the first mode; a lid member 4 used in the second mode; a compressed air source 3 for supplying the compressed air A; an extraction member 5 having an inlet 9 connected to the compressed air source 3, an outlet 10 connected to the object T, and an attachment portion 5a to which the container 2 or the lid member 4 can be attached; and a sealing member 8 disposed on the attachment portion 5a. The attachment portion 5a has an extraction-side contact portion 5b including an extraction-side protrusion portion 5c protruding toward the sealing member 8. The container 2 has a container-side contact portion 2b that clamps the sealing member 8 between the container-side contact portion 2b and the extraction-side contact portion 5b. The lid member 4 has a lid-side contact portion 4a including a lid-side protrusion portion 4b protruding toward the sealing member 8.

## Description

### BACKGROUND OF THE INVENTION

### Field of the Invention

The present invention relates to a puncture repair kit capable of selectively switching between a first mode in which a puncture of an object can be repaired and a second mode in which only compressed air can be supplied.

### Background Art

Hitherto, a puncture repair kit for repairing a punctured tire has been known. For example, Japanese Laid-Open Patent Publication No. 2023-154298 suggests a puncture repair kit for repairing a puncture by injecting a puncture repair liquid and compressed air into a punctured tire by using compressed air from a compressor.

However, in the puncture repair kit disclosed in Japanese Laid-Open Patent Publication No. 2023-154298, a sealing member may be deformed during long-term storage, which possibly results in insufficient air tightness at the time of puncture repair.

The present invention has been made in view of the aforementioned circumstances, and a main object of the present invention is to provide a puncture repair kit capable of improving the air tightness.

### SUMMARY OF THE INVENTION

The present invention is directed to a puncture repair kit capable of selectively switching between a first mode in which a puncture of an object can be repaired and a second mode in which only compressed air can be supplied to the object, the puncture repair kit including: a container in which a puncture repair liquid used in the first mode is contained; a lid member used in the second mode; a compressed air source for supplying the compressed air; an extraction member having an inlet connected to the compressed air source, an outlet connected to the object, and an attachment portion to which the container or the lid member can be attached; and a sealing member disposed on the attachment portion, wherein the attachment portion has an annular extraction-side contact portion in contact with the sealing member, the container has an annular container-side contact portion configured to clamp the sealing member between the container-side contact portion and the extraction-side contact portion, when the container is attached to the extraction member, the lid member has an annular lid-side contact portion configured to clamp the sealing member between the lid-side contact portion and the extraction-side contact portion, when the lid member is attached to the extraction member, the extraction-side contact portion includes an extraction-side protrusion portion protruding toward the sealing member, and the lid-side contact portion includes a lid-side protrusion portion protruding toward the sealing member.

The puncture repair kit according to the present invention has the above-described configuration, whereby the air tightness can be improved.

### BRIEF DESCRIPTION OF THE DRAWINGS

FIG. 1 is a cross-sectional view schematically showing a state where a container is attached in one embodiment of a puncture repair kit of the present invention;
FIG. 2 is a cross- sectional view schematically showing a state where a lid member is attached in the puncture repair kit;
FIG. 3 is an enlarged view of a part B in FIG. 1;
FIG. 4 is an enlarged view of a part C in FIG. 2; and
FIG. 5 is a perspective view of an inner member to which a sealing member is attached.

### DETAILED DESCRIPTION

Hereinafter, an embodiment of the present invention will be described in detail with reference to the drawings.

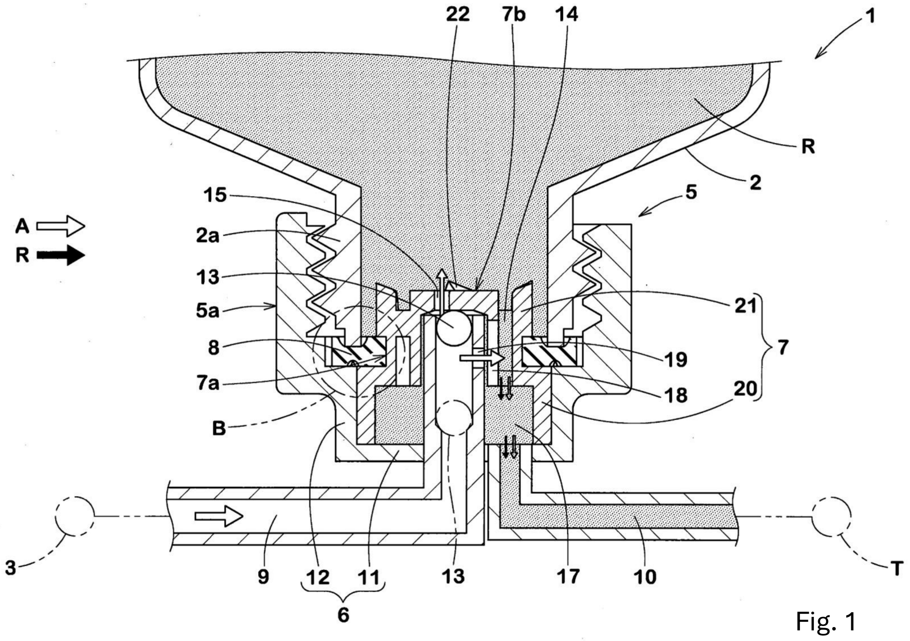

FIG. 1 is a cross-sectional view schematically showing a state where a container 2 is attached in a puncture repair kit 1 of the present embodiment. As shown in FIG. 1, the puncture repair kit 1 is suitably used for repairing a puncture of an object T such as a punctured tire by attaching, for example, a container 2 in which a puncture repair liquid R is contained, and filling the object T with the puncture repair liquid R and compressed air A.

Here, in the present specification, a first mode in which a puncture of the object T can be repaired refers to the state of filling the object T with the puncture repair liquid R and the compressed air A. The container 2 of the present embodiment is used in the first mode. In the present specification, in order to help in the understanding, the flow of the puncture repair liquid R at the time of puncture repair is indicated by a black-filled arrow and the flow of the compressed air A at the time of puncture repair is indicated by an outlined arrow.

The container 2 has a mouth portion 2a around which a male thread is formed. Regarding the container 2, it is desirable that the puncture repair liquid R is introduced into the container 2 through the mouth portion 2a. The mouth portion 2a has, for example, a film (not shown) for retaining the contained puncture repair liquid R in an airtight manner. Such a container 2 is suitable for storing the puncture repair liquid R for a long period of time.

The puncture repair kit 1 of the present embodiment includes a compressed air source 3 for supplying the compressed air A. The compressed air source 3 is a compressor, for example. The compressed air source 3 generates the compressed air A by being supplied with electricity via, for example, a cord (not shown) connected to an external power source. Such a compressed air source 3 can supply a large amount of the compressed air A while being small in size, and thus has excellent storability when not in use. The compressed air source 3 is not limited thereto, and may be, for example, a pressure container in which the compressed air A is contained.

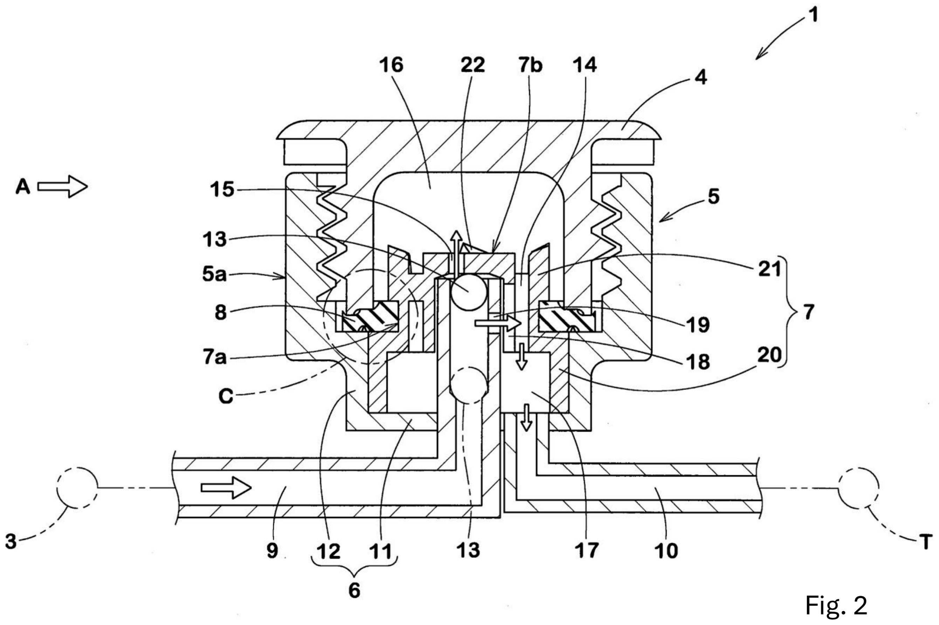

FIG. 2 is a cross-sectional view schematically indicating a state where a lid member 4 is attached in the puncture repair kit 1. As shown in FIG. 2, by attaching, for example, the lid member 4 for supplying only the compressed air A, the puncture repair kit 1 is also suitably used for filling the object T only with the compressed air A when the air pressure of the object T has dropped. Here, in the present specification, a second mode in which only the compressed air A is supplied refers to the state of filling the object T only with the compressed air A. The lid member 4 of the present embodiment is used in the second mode.

In the puncture repair kit 1 of the present embodiment, only the compressed air A can be supplied to the object T by driving the compressed air source 3 in a state where the lid member 4 is attached. Such a puncture repair kit 1 can be used not only when the object T is punctured but also when the air pressure of the object T has dropped. Furthermore, such a puncture repair kit 1 is applicable to various applications using the compressed air A in addition to the air pressure filling.

The puncture repair kit 1 is desirably stored inside a vehicle in a state where the lid member 4 is attached. Such a puncture repair kit 1 can be stored in a compact manner so as to be storable even in a small storage space. In addition, such a puncture repair kit 1 can easily be adapted for a case where the expiration period of the puncture repair liquid R in the container 2 has passed due to long-term storage, by replacing only the container 2 in which the puncture repair liquid R is contained.

As shown in FIG. 1 and FIG. 2, the puncture repair kit 1 of the present embodiment includes an extraction member 5 attached between the container 2 or the lid member 4 and the compressed air source 3. Such a puncture repair kit 1 is capable of selectively switching between the first mode in which a puncture of the object T can be repaired and the second mode in which only the compressed air A can be supplied to the object T, depending on whether the mouth portion 2a of the container 2 or the lid member 4 is attached to the extraction member 5.

The extraction member 5 is, for example, a connection tool through which the compressed air A is supplied from the compressed air source 3 and which is used for extracting the puncture repair liquid R from the container 2. The extraction member 5 desirably includes an outer member 6 having an attachment portion 5a to which the mouth portion 2a of the container 2 or the lid member 4 can be attached, and an inner member 7 combined with the inside of the outer member 6.

The puncture repair kit 1 of the present embodiment includes a sealing member 8 disposed on the attachment portion 5a of the extraction member 5. The sealing member 8 is attached, for example, to the outer circumference of the inner member 7. Such a sealing member 8 can improve the air tightness between the extraction member 5 and the container 2 or the lid member 4.

The extraction member 5 of the present embodiment has an inlet 9 connected to the compressed air source 3 and an outlet 10 connected to the object T. Such an extraction member 5 allows the compressed air A supplied from the compressed air source 3 to be smoothly introduced, and to be easily discharged to the object T.

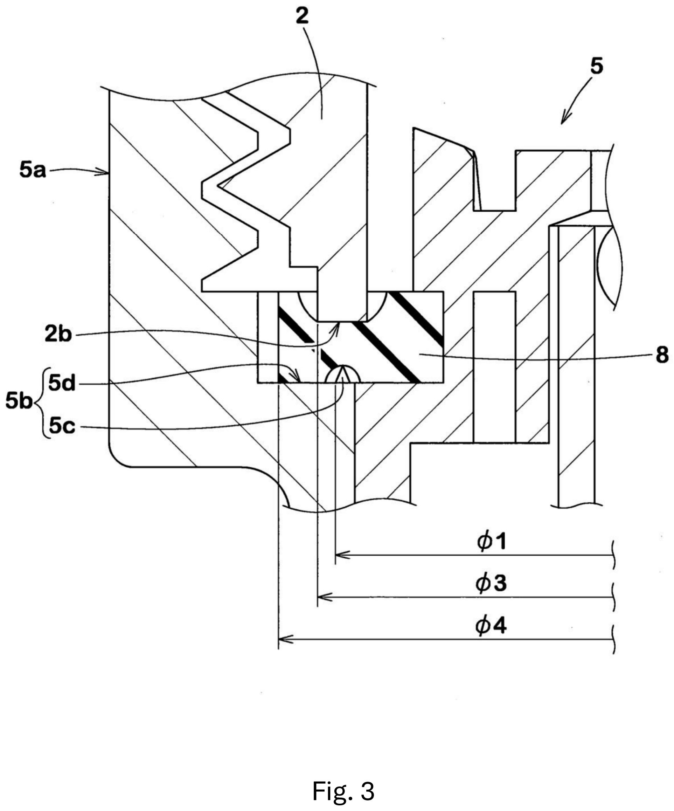

FIG. 3 is an enlarged view of a part B in FIG. 1. As shown in FIG. 3, the attachment portion 5a of the extraction member 5 of the present embodiment has an annular extraction-side contact portion 5b in contact with the sealing member 8. The extraction-side contact portion 5b desirably has an extraction-side protrusion portion 5c protruding toward the sealing member 8, and an outer-side contact portion 5d radially outward of the extraction-side protrusion portion 5c. Such an extraction-side contact portion 5b can improve the air tightness in the first mode owing to the extraction-side protrusion portion 5c, and can improve the air tightness in the second mode owing to the outer-side contact portion 5d.

The container 2 of the present embodiment has an annular container-side contact portion 2b that clamps the sealing member 8 between the container-side contact portion 2b and the extraction-side contact portion 5b of the attachment portion 5a, when the container 2 is attached to the extraction member 5. The container-side contact portion 2b desirably has a shape having a large contact area with the sealing member 8. Such a container-side contact portion 2b can assuredly clamp the sealing member 8 between the container-side contact portion 2b and the extraction-side protrusion portion 5c of the extraction-side contact portion 5b. Thus, the puncture repair kit 1 of the present embodiment can improve the air tightness when used in the first mode even if the sealing member 8 is deformed due to long-term storage at a low temperature in the second mode.

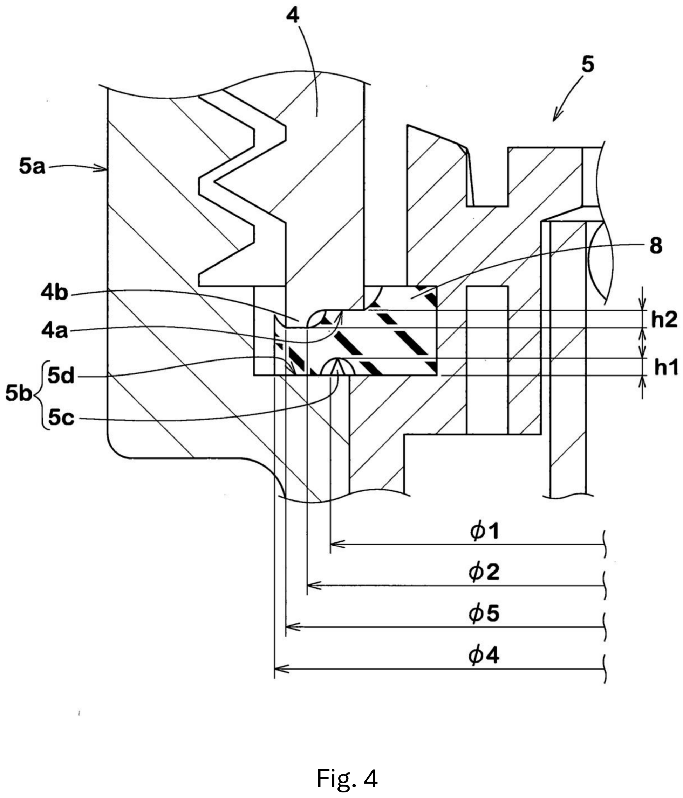

FIG. 4 is an enlarged view of a part C in FIG. 2. As shown in FIG. 4, the lid member 4 of the present embodiment has an annular lid-side contact portion 4a that clamps the sealing member 8 between the lid-side contact portion 4a and the extraction-side contact portion 5b of the attachment portion 5a, when the lid member 4 is attached to the extraction member 5. The lid-side contact portion 4a desirably includes a lid-side protrusion portion 4b protruding toward the sealing member 8. The lid-side protrusion portion 4b of the present embodiment is provided at a position facing the outer-side contact portion 5d of the extraction-side contact portion 5b. Such a lid member 4 can restrict deformation of the sealing member 8 even under long-term storage at a low temperature since only a part of the sealing member 8 pressed by the lid-side protrusion portion 4b undergoes large deformation.

Such a puncture repair kit 1 can improve the air tightness in the first mode owing to the container-side contact portion 2b and the extraction-side protrusion portion 5c of the extraction-side contact portion 5b and can improve the air tightness in the second mode owing to the lid-side protrusion portion 4b of the lid-side contact portion 4a and the outer-side contact portion 5d of the extraction-side contact portion 5b. Thus, the puncture repair kit 1 of the present embodiment is capable of improving the air tightness.

In a more preferable aspect, the container-side contact portion 2b has a planar shape that does not include a protrusion portion. Such a container-side contact portion 2b can have a large contact area with the sealing member 8, and thus can assuredly clamp the sealing member 8 between the container-side contact portion 2b and the extraction-side contact portion 5b of the attachment portion 5a. Here, the planar shape of the container-side contact portion 2b means that the container-side contact portion 2b is formed of a surface which is parallel to the surface of the sealing member 8 before contact.

The lid-side protrusion portion 4b and the extraction-side protrusion portion 5c of the present embodiment each extend annularly. Such a lid-side protrusion portion 4b and an extraction-side protrusion portion 5c contribute to improving the air tightness in the first mode and the second mode. Here, a case where the lid-side protrusion portion 4b and the extraction-side protrusion portion 5c each extend annularly means that the lid-side protrusion portion 4b and the extraction-side protrusion portion 5c extend continuously in a circular shape in a plan view. However, the lid-side protrusion portion 4b and the extraction-side protrusion portion 5c may extend, for example, intermittently in a circular shape in a plan view.

The lid-side protrusion portion 4b and the extraction-side protrusion portion 5c are each desirably configured as a projection portion or a step portion. The lid-side protrusion portion 4b of the present embodiment is configured as a step portion. The extraction-side protrusion portion 5c of the present embodiment is configured as a projection portion having a triangular cross-sectional shape. Such a lid-side protrusion portion 4b and an extraction-side protrusion portion 5c can achieve both durability and air tightness.

The extraction-side protrusion portion 5c of the present embodiment is provided in the outer member 6. Such an extraction-side protrusion portion 5c can suppress the breakage of the sealing member 8 when combined, even if the outer member 6 and the inner member 7 are combined while the sealing member 8 is attached to the inner member 7.

A maximum diameter Φ1 of the extraction-side protrusion portion 5c is desirably different from a minimum diameter Φ2 of the lid-side protrusion portion 4b. Such an extraction-side protrusion portion 5c and a lid-side protrusion portion 4b can restrict the deformation of the sealing member 8 even under long-term storage at a low temperature, and can disperse the compressed position in the sealing member 8, whereby excessive deterioration of the sealing member 8 can be suppressed.

In the present embodiment, the maximum diameter Φ1 of the extraction-side protrusion portion 5c is smaller than the minimum diameter Φ2 of the lid-side protrusion portion 4b. Such an extraction-side protrusion portion 5c can assuredly perform sealing on the radially inner side of the sealing member 8, thereby improving the air tightness in both the first mode and the second mode.

A protrusion height h1 of the extraction-side protrusion portion 5c is desirably smaller than a protrusion height h2 of the lid-side protrusion portion 4b. For example, the protrusion height h1 of the extraction-side protrusion portion 5c may be the same as the protrusion height h2 of the lid-side protrusion portion 4b. Such an extraction-side protrusion portion 5c can suppress the deformation of the sealing member 8 in the second mode, thereby improving the air tightness in the first mode.

The protrusion height h1 of the extraction-side protrusion portion 5c is preferably not greater than 100% of the protrusion height h2 of the lid-side protrusion portion 4b. When the protrusion height h1 of the extraction-side protrusion portion 5c is not greater than 100% of the protrusion height h2 of the lid-side protrusion portion 4b, the deformation of the sealing member 8 in the second mode can be suppressed, thereby improving the air tightness in the first mode. From such a viewpoint, the protrusion height h1 of the extraction-side protrusion portion 5c is more preferably not greater than 99% of the protrusion height h2 of the lid-side protrusion portion 4b.

As shown in FIG. 3 and FIG. 4, the minimum diameter Φ2 of the lid-side protrusion portion 4b is desirably larger than the maximum diameter Φ3 of the container-side contact portion 2b. For example, the minimum diameter Φ2 of the lid-side protrusion portion 4b may be the same as the maximum diameter Φ3 of the container-side contact portion 2b. Such a lid-side protrusion portion 4b compresses the sealing member 8 at a position different from the container-side contact portion 2b, whereby high air tightness in the first mode can be maintained even when the sealing member 8 is deformed under long-term storage at a low temperature in the second mode.

The minimum diameter Φ2 of the lid-side protrusion portion 4b is preferably not less than 100% of the maximum diameter Φ3 of the container-side contact portion 2b. When the minimum diameter Φ2 of the lid-side protrusion portion 4b is not less than 100% of the maximum diameter Φ3 of the container-side contact portion 2b, the risk of overlap between the container-side contact portion 2b and the position of deformation of the sealing member 8 caused by the lid-side protrusion portion 4b during long-term storage in the second mode is eliminated. From such a viewpoint, the minimum diameter Φ2 of the lid-side protrusion portion 4b is more preferably not less than 101% of the maximum diameter Φ3 of the container-side contact portion 2b.

The extraction-side protrusion portion 5c is desirably provided at a position overlapping the container-side contact portion 2b in the radial direction. Such an extraction-side protrusion portion 5c can elastically deform the sealing member 8 between the extraction-side protrusion portion 5c and the container-side contact portion 2b, thereby improving the air tightness in the first mode.

As shown in FIG. 1 and FIG. 2, the inlet 9 and the outlet 10 of the present embodiment are each provided to the outer member 6. The outer member 6 includes, for example, a floor plate portion 11 provided with the inlet 9 and the outlet 10, and a cylindrical portion 12 extending from the floor plate portion 11. The attachment portion 5a of the extraction member 5 is desirably provided in the cylindrical portion 12. Such an outer member 6 can be firmly connected to the container 2 or the lid member 4.

The outer member 6 is configured such that, for example, the inlet 9, the outlet 10, the floor plate portion 11, and the cylindrical portion 12 are integrally molded. Such an outer member 6 can reduce the number of components, thereby leading to excellent cost performance. The outer member 6 is not limited thereto. For example, the inlet 9 and the outlet 10 may be molded as separate members from the floor plate portion 11 and the cylindrical portion 12 and connected thereto.

The inlet 9 desirably has a check valve 13 for preventing backflow of the puncture repair liquid R to the compressed air source 3. FIG. 1 and FIG. 2 each show the check valve 13 in a state where the compressed air A is being supplied. In addition, the check valve 13 in a state where the supply of the compressed air A is stopped is indicated by an alternate long and two short dashes line in FIG. 1 and FIG. 2.

Such an inlet 9 can suppress the backflow of the puncture repair liquid R to the compressed air source 3 even when the puncture repair liquid R remains inside the container 2 at the time of stopping the supply of the compressed air A from the compressed air source 3, thereby preventing the breakage of the compressed air source 3.

The check valve 13 is, for example, a ball valve. Such a check valve 13 can assuredly suppress the backflow of the puncture repair liquid R with a simple structure, thereby leading to excellent cost performance.

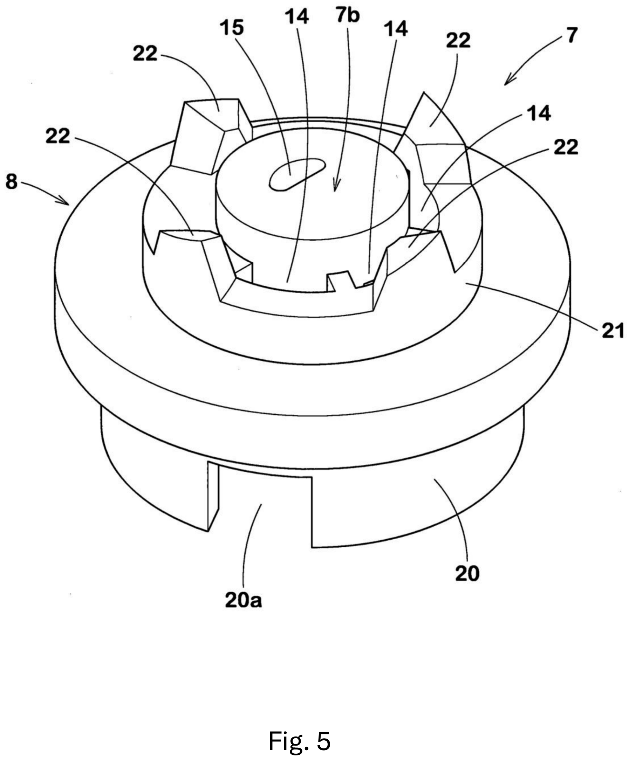

FIG. 5 is a perspective view of the inner member 7 to which the sealing member 8 is attached. As shown in FIG. 1, FIG. 2, and FIG. 5, the inner member 7 desirably includes a supply port 14 through which the puncture repair liquid R is supplied from the container 2, and a first opening portion 15 for supplying the compressed air A from the inlet 9 toward the inside of the container 2, in the first mode.

The supply port 14 extends, for example, in the vertical direction at the time of puncture repair. The first opening portion 15 is desirably provided at an end of the inlet 9. Such an inner member 7 allows the compressed air A to be supplied to the inside of the container 2 and allows the puncture repair liquid R to be smoothly supplied by the supplied compressed air A and gravity, in the first mode.

In the second mode, the supply port 14 and the first opening portion 15 are used to allow the compressed air A to flow through a space 16 formed between the lid member 4 and the inner member 7. Such an inner member 7 allows the compressed air A to be efficiently supplied to the object T in the second mode.

The inner member 7 of the present embodiment has a valve retention structure 7b for preventing the check valve 13 from being discharged from the inlet 9. The valve retention structure 7b is, for example, provided adjacent to the first opening portion 15. Such a valve retention structure 7b eliminates the need for additional machining, thereby leading to excellent cost performance. The valve retention structure 7b is not limited thereto, and may be, for example, a protrusion portion protruding to the inside of the inlet 9 or a small-diameter portion having a smaller inner diameter than the inlet 9.

The inner member 7 and the outer member 6 include, for example, a mixing chamber 17, configured when combined, for generating a mixture of the puncture repair liquid R and the compressed air A in the inside thereof. The mixing chamber 17 is, for example, an integral space that extends around the inlet 9. Such a mixing chamber 17 allows the puncture repair liquid R and the compressed air A to be uniformly mixed in a large space.

The inlet 9 includes at least one second opening portion 18 for supplying at least a part of the compressed air A to the supply port 14 or the mixing chamber 17. In the present embodiment, the inlet 9 includes one second opening portion 18. FIG. 1 and FIG. 2 each show a state where at least a part of the compressed air A is supplied to the supply port 14. Such an extraction member 5 allows the compressed air A to be supplied to the inside of at least one of the mixing chamber 17 or the supply port 14 without interrupting the flow of the puncture repair liquid R in the supply port 14, whereby the puncture repair liquid R and the compressed air A can be efficiently mixed.

The inner member 7 includes a third opening portion 19 for supplying at least a part of the compressed air A to the supply port 14 or the mixing chamber 17. The third opening portion 19 of the present embodiment is in communication with the supply port 14. Such an inner member 7 allows at least a part of the compressed air A to be supplied to the supply port 14 or the mixing chamber 17 by overlapping the third opening portion 19 and the second opening portion 18 provided to the inlet 9 of the outer member 6.

The inner member 7 allows the entire amount of the compressed air A to be supplied to the inside of the container 2 by, for example, being combined with the outer member 6 in such a manner that the second opening portion 18 and the third opening portion 19 do not overlap each other, or by being replaced with another member that does not have a third opening portion 19. Such a puncture repair kit 1 can be adapted to required specifications by using many shared components, thereby leading to excellent cost performance.

The inner member 7 includes, for example, an outer cylinder portion 20 to be combined with the cylindrical portion 12 of the outer member 6 and a ceiling portion 21 to be combined with the inlet 9.

The outer cylinder portion 20 is provided with at least one notch 20a for use in positioning when combined with the cylindrical portion 12 of the outer member 6. In the present embodiment, three notches 20a are provided. The three notches 20a desirably have different pitches from each other. Such an outer cylinder portion 20 is combined with the cylindrical portion 12 of the outer member 6 only unidirectionally and thus can be prevented from being erroneously combined.

In a specification that involves changing the combining angle between the inner member 7 and the outer member 6 so as to change the flow path of the compressed air A, it is desirable to set the pitches of the three notches 20a to be the same and use display or the like to prevent erroneous combination.

At least one of the notches 20a has, for example, a lock mechanism (not shown) for retaining the combined state between the outer member 6 and the inner member 7. Having such notches 20a eliminates the possibility of detachment of the outer member 6 and the inner member 7 from each other, and thus the reliability under long-term storage can be improved.

The ceiling portion 21 is provided with at least one supply port 14, at least one first opening portion 15, and at least one third opening portion 19. In the present embodiment, the ceiling portion 21 is provided with three supply ports 14, one first opening portion 15, and one third opening portion 19. The supply port 14 of the ceiling portion 21 of the present embodiment is provided on one side in the periphery of the first opening portion 15. Such a supply port 14 enables active mixing of the puncture repair liquid R and the compressed air A in the mixing chamber 17, whereby the puncture repair liquid R and the compressed air A can be efficiently mixed.

In the first mode, the ceiling portion 21 includes at least one breaking portion 22 for breaking a film (not shown) provided to the mouth portion 2a of the container 2. The ceiling portion 21 in the present embodiment includes four breaking portions 22. The breaking portions 22 are provided, for example, at the periphery of the supply port 14. Such an inner member 7, when attached to the container 2, allows the puncture repair liquid R to be supplied by breaking the film of the container 2.

The inner member 7 desirably has a seal retention structure 7a for preventing the sealing member 8 from falling off the inner member 7. Such an extraction member 5 eliminates the possibility of the sealing member 8 falling off the inner member 7 even at the time of changing the second mode to the first mode.

The seal retention structure 7a is, for example, a groove portion formed in the outer periphery of the inner member 7. Such a seal retention structure 7a can assuredly suppress the falling of the sealing member 8 with a simple structure, making it possible to achieve both cost performance and reliability.

The sealing member 8 of the present embodiment is a disk-shaped gasket. The sealing member 8 is, for example, in contact with the extraction-side contact portion 5b of the extraction member 5 at one surface thereof and in contact with the container-side contact portion 2b of the container 2 or the lid-side contact portion 4a of the lid member 4 at the other surface thereof. Such a sealing member 8 can improve the air tightness between the extraction member 5 and the container 2 or the lid member 4.

The sealing member 8 is in contact with the extraction-side contact portion 5b for the outer member 6 and the extraction-side contact portion 5b for the inner member 7. Such a sealing member 8 can improve the air tightness between the outer member 6 and the inner member 7.

In the first mode, the sealing member 8 of the present embodiment maintains a hermetic state by being clamped between the mouth portion 2a of the container 2 and the extraction member 5. In the second mode, the sealing member 8 of the present embodiment maintains the hermetic state by being clamped between the lid member 4 and the extraction member 5. Such a sealing member 8 is suitable for maintaining the hermetic state for a long period of time.

As shown in FIG. 3, the maximum diameter Φ3 of the container-side contact portion 2b of the present embodiment is smaller than the maximum diameter Φ4 of the sealing member 8. Such a container-side contact portion 2b can assuredly be in contact with the sealing member 8, thereby improving the air tightness.

As shown in FIG. 4, the maximum diameter Φ5 of the lid-side protrusion portion 4b is desirably smaller than the maximum diameter Φ4 of the sealing member 8. Such a lid-side protrusion portion 4b can assuredly be in contact with the sealing member 8, thereby improving the air tightness. It is noted that the maximum diameter Φ5 of the lid-side protrusion portion 4b may be the same as the maximum diameter Φ4 of the sealing member 8, for example.

Although the particularly preferred embodiments of the present invention have been described in detail above, the present invention is not limited to the above-described embodiments, and various modifications can be made to implement the present invention.

### [Additional Note]

The present invention is as follows.

### [Present Invention 1]

A puncture repair kit capable of selectively switching between a first mode in which a puncture of an object can be repaired and a second mode in which only compressed air can be supplied to the object, the puncture repair kit including:
a container in which a puncture repair liquid used in the first mode is contained;
a lid member used in the second mode;
a compressed air source for supplying the compressed air;
an extraction member having an inlet connected to the compressed air source, an outlet connected to the object, and an attachment portion to which the container or the lid member can be attached; and
a sealing member disposed on the attachment portion, wherein
the attachment portion has an annular extraction-side contact portion in contact with the sealing member,
the container has an annular container-side contact portion configured to clamp the sealing member between the container-side contact portion and the extraction-side contact portion, when the container is attached to the extraction member,
the lid member has an annular lid-side contact portion configured to clamp the sealing member between the lid-side contact portion and the extraction-side contact portion, when the lid member is attached to the extraction member,
the extraction-side contact portion includes an extraction-side protrusion portion protruding toward the sealing member, and
the lid-side contact portion includes a lid-side protrusion portion protruding toward the sealing member.

### [Present Invention 2]

The puncture repair kit according to Present Invention 1, wherein the container-side contact portion has a planar shape.

### [Present Invention 3]

The puncture repair kit according to Present Invention 1 or 2, wherein the lid-side protrusion portion and the extraction-side protrusion portion are each configured as a projection portion or a step portion.

### [Present Invention 4]

The puncture repair kit according to any one of Present Inventions 1 to 3, wherein the lid-side protrusion portion and the extraction-side protrusion portion each extend annularly.

### [Present Invention 5]

The puncture repair kit according to Present Invention 4, wherein a maximum diameter of the extraction-side protrusion portion is different from a minimum diameter of the lid-side protrusion portion.

### [Present Invention 6]

The puncture repair kit according to Present Invention 5, wherein the maximum diameter of the extraction-side protrusion portion is smaller than the minimum diameter of the lid-side protrusion portion.

### [Present Invention 7]

The puncture repair kit according to any one of Present Inventions 4 to 6, wherein a minimum diameter of the lid-side protrusion portion is larger than a maximum diameter of the container-side contact portion.

### [Present Invention 8]

The puncture repair kit according to any one of Present Inventions 1 to 7, wherein a protrusion height of the extraction-side protrusion portion is smaller than a protrusion height of the lid-side protrusion portion.

### [Present Invention 9]

The puncture repair kit according to any one of Present Inventions 1 to 8, wherein the sealing member is a disk-shaped gasket.

### [Present Invention 10]

The puncture repair kit according to Present Invention 9, wherein a maximum diameter of the container-side contact portion is smaller than a maximum diameter of the sealing member.

## Claims

1. A puncture repair kit (1) capable of selectively switching between a first mode in which a puncture of an object (T) can be repaired and a second mode in which only compressed air (A) can be supplied to the object (T), the puncture repair kit (1) comprising:
a container (2) in which a puncture repair liquid (R) used in the first mode is contained;
a lid member (4) used in the second mode;
a compressed air source (3) for supplying the compressed air (A);
an extraction member (5) having an inlet (9) connected to the compressed air source (3), an outlet (10) connected to the object (T), and an attachment portion (5a) to which the container (2) or the lid member (4) can be attached; and
a sealing member (8) disposed on the attachment portion (5a), wherein
the attachment portion (5a) has an annular extraction-side contact portion (5b) in contact with the sealing member (8),
the container (2) has an annular container-side contact portion (2b) configured to clamp the sealing member (8) between the container-side contact portion (2b) and the extraction-side contact portion (5b), when the container (2) is attached to the extraction member (5),
the lid member (4) has an annular lid-side contact portion (4a) configured to clamp the sealing member (8) between the lid-side contact portion (4a) and the extraction-side contact portion (5b), when the lid member (4) is attached to the extraction member (5),
the extraction-side contact portion (5b) includes an extraction-side protrusion portion (5c) protruding toward the sealing member (8), and
the lid-side contact portion (4a) includes a lid-side protrusion portion (4b) protruding toward the sealing member (8).

2. The puncture repair kit (1) according to claim 1, wherein the container-side contact portion (2b) has a planar shape.

3. The puncture repair kit (1) according to claim 1 or 2, wherein the lid-side protrusion portion (4b) and the extraction-side protrusion portion (5c) are each configured as a projection portion or a step portion.

4. The puncture repair kit (1) according to any one of claims 1 to 3, wherein the lid-side protrusion portion (4b) and the extraction-side protrusion portion (5c) each extend annularly.

5. The puncture repair kit (1) according to claim 4, wherein a maximum diameter (Φ1) of the extraction-side protrusion portion (5c) is different from a minimum diameter (Φ2) of the lid-side protrusion portion (4b).

6. The puncture repair kit (1) according to claim 5, wherein the maximum diameter (Φ1) of the extraction-side protrusion portion (5c) is smaller than the minimum diameter (Φ2) of the lid-side protrusion portion (4b).

7. The puncture repair kit (1) according to any one of claims 4 to 6, wherein a minimum diameter (Φ2) of the lid-side protrusion portion (4b) is larger than a maximum diameter (Φ3) of the container-side contact portion (2b).

8. The puncture repair kit (1) according to any one of claims 1 to 7, wherein a protrusion height (h1) of the extraction-side protrusion portion (5c) is smaller than a protrusion height (h2) of the lid-side protrusion portion (4b).

9. The puncture repair kit (1) according to any one of claims 1 to 8, wherein the sealing member (8) is a disk-shaped gasket.

10. The puncture repair kit (1) according to claim 9, wherein a maximum diameter (Φ3) of the container-side contact portion (2b) is smaller than a maximum diameter (Φ4) of the sealing member (8).
